**Europäisches Patentamt**

**European Patent Office**

**Office européen des brevets**

(19)

(11) Veröffentlichungsnummer: **0 389 909**

**A2**

(12)

# EUROPÄISCHE PATENTANMELDUNG

(21) Anmeldenummer: **90105140.9**

(22) Anmeldetag: **19.03.90**

(51) Int. Cl.⁵: **B60S 1/04**

(30) Priorität: **31.03.89 DE 3910404**

(43) Veröffentlichungstag der Anmeldung:
**03.10.90 Patentblatt 90/40**

(84) Benannte Vertragsstaaten:
**ES FR GB IT**

(71) Anmelder: **AUDI AG**
**Auto-Union-Strasse 1 Postfach 220**
**D-8070 Ingolstadt(DE)**

(72) Erfinder: **Brockhaus, Herbert**
**Leharstrasse 2**
**D-8071 Wettstetten(DE)**

(74) Vertreter: **Le Vrang, Klaus**
**AUDI AG Postfach 220 Patentabteilung I/EQP**
**D-8070 Ingolstadt(DE)**

(54) Scheibenwischeranordnung.

(57) Es wird für die Scheibenwischeinrichtung vorgeschlagen, Fahrer- und Beifahrerscheibenwischer mit
jeweils unterschiedlichem Anpreßdruck zu versehen,
um die unterschiedlichen Strömungsverhältnisse zu
kompensieren.

Fig. 1

**EP 0 389 909 A2**

## Scheibenwischeranordnung

Die Erfindung bezieht sich auf eine Scheibenwischeranordnung gemäß dem Oberbegriff des Anspruchs 1.

Bei einer Vielzahl von Personenkraftwagenmodellen besteht die Scheibenwischeranordnung aus zwei Scheibenwischern. Mehr als zwei Scheibenwischer sind insbesondere von Lastkraftwagen bekannt.

Da jeder Scheibenwischer einen unterschiedlichen Bereich der Frontscheibe überstreicht, sind im Fahrbetrieb die jeweiligen Scheibenwischer unterschiedlichen Strömungsverhältnissen unterworfen. So arbeitet bei einem Personenkraftwagen mit zwei Scheibenwischern und - vom Fahrer aus gesehen - linksgelagerten Scheibenwischern der Fahrerscheibenwischer in etwa von der Mitte zum linken Rand und steht dabei über einen erheblichen Anteil seines Arbeitsbereiches in etwa senkrecht zu der beim Fahrbetrieb über die Frontscheibe streichenden Luftströmung. Der Beifahrerscheibenwischer hingegen, dessen Lagerung weiter zur Fahrzeugmittelachse liegt und dessen Wischerblatt rechts außen abgelegt ist, liegt über einen großen Anteil seiner Bewegungsbahn längs zur Strömungsrichtung und ist dementsprechend weniger Auftriebskräften unterworfen.

Aus der US-PS 2,660,748 ist weiterhin bekannt, einem nicht ausreichenden Anpreßdruck eines Scheibenwischers, z. B. bei Schnee, dadurch zu begegnen, daß eine Klammer aufgeschoben wird, die den Scheibenwischer stärker auf die Scheibe preßt. Aus dieser Literaturstelle ist die Variation des Anpreßdruckes abhängig z. B. von Wetter verhältnissen bei einem Einscheibenwischersystem bekannt.

Aus dem deutschen Gebrauchsmuster 1 971 367 ist es bekannt, diesen Umständen dadurch Rechnung zu tragen, daß eine Windleitvorrichtung allein am Fahrerscheibenwischer, also dem Scheibenwischer, der einem größeren Auftrieb durch die Strömungsverhältnisse unterworfen ist, angebracht wird.

Trotz der Wirksamkeit dieser Maßnahme ist das optische Ergebnis nicht zufriedenstellend, da die beiden Scheibenwischer unterschiedlich aussehen. Darüber hinaus ist die breite Windleitvorrichtung auch störend im Hinblick auf die Sichtverhältnisse. Außerdem erschwert sie die Reinigung der Frontscheibe mit Hilfe der Scheibenwaschanlage, da ein größerer Teil des Wasserstrahles durch die Windleitvorrichtung abgefangen wird und nicht gezielt auf die Frontscheibe gebracht wird.

Aufgabe der Erfindung ist es, bei einem verbesserten Erscheinungsbild den unterschiedlichen Strömungsverhältnissen Rechnung zu tragen.

Die Aufgabe wird gelöst durch den Hauptanspruch.

Erfindungsgemäß ist vorgesehen, daß die Scheibenwischer einen unterschiedlichen Anpreßdruck besitzen, also der Scheibenwischer, der einem geringeren Auftrieb unterworfen ist, einen weniger starken Anpreßdruck besitzt als der Scheibenwischer, dessen höherer Auftrieb durch eine entsprechende größere Anpreßkraft kompensiert wird.

Durch diese erfindungsgemäße Maßnahme wird ein geringerer Verschleiß der Scheibenwischergummis erreicht, da ein zu hoher - überflüssiger - Anpreßdruck vermieden wird. Auch die Gleichmäßigkeit des Scheibenwischerlaufes wird positiv beeinflußt. Da die Scheibenwischer die größere Zeit der Gesamtbetriebsdauer des Fahrzeuges außer Betrieb sind, wird durch die Rücknahme des überflüssig hohen Anpreßdruckes gerade im Ruhezustand eine unnötige Beanspruchung des Scheibenwischergummis vermieden.

Bevorzugte Ausführungsformen sind in den Unteransprüchen beschrieben. Anspruch 2 beschreibt eine Anordnung, bei der die Anpreßkraft durch Zugfedern erreicht wird. Die unterschiedliche Anpreßkraft wird durch Verwendung von Zugfedern mit unterschiedlicher Federkonstante erreicht. Alternativ dazu ist denkbar, daß eine höhere Anpreßkraft durch eine zusätzliche, zweite Zugfeder erzielt werden kann.

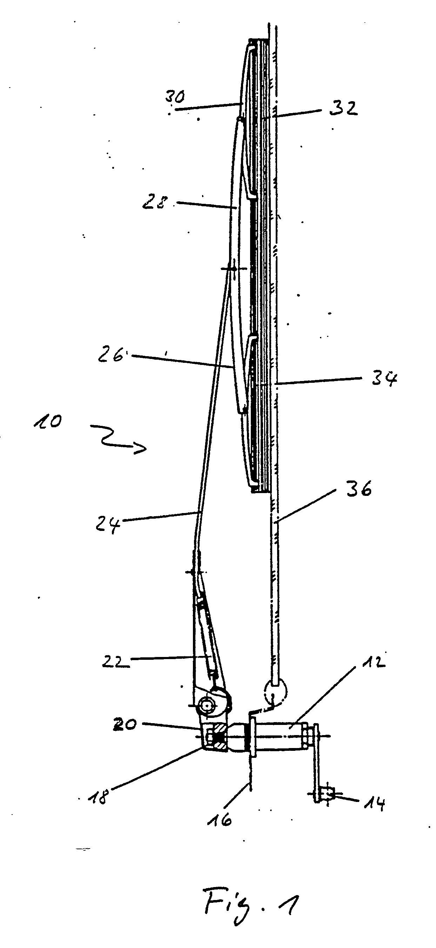

Die einzige Zeichnung zeigt den üblichen Aufbau eines Scheibenwischers 10, ein Wischerlager 12 lagert die über einen Kugelbolzen 14 angetriebene, durch das Karosserieblech 16 geführte Welle, an deren abtriebsseitigen Ende über eine Kerbkegelbefestigung 18 ein Wischerarm 24 befestigt ist. Eine Abdeckkappe 20 überdeckt die Kerbkegelbefestigung 18. Den Anpreßdruck des Scheibenwischers an die Windschutzscheibe 36 erzielt man dabei über die Zugfeder 22, die ausgehend vom Fußteil mit der Kerbkegelbefestigung 18 den Wischerarm 24 in Richtung Scheibe 36 beaufschlagt. Diese Anpreßkraft wird auf das Wischerblatt 26 übertragen und verteilt sich im einzelnen über den Mittelbügel 28 und die beiden Krallenbügel 30 auf die Federschiene 34, die das Wischgummi 32 an die Windschutzscheibe 36 anpreßt.

Die erfindungsgemäße Einstellung des Anpreßdruckes läßt sich durch die Auswahl einer geeigneten Zugfeder 22 erzielen. Somit wird man für das Anwendungsbeispiel des linksgelagerten, im Ruhezustand nach rechts weisenden Scheibenwischers für den Fahrerscheibenwischer eine stärkere Zugfeder 22 als für den Beifahrerscheibenwischer wählen. Umgekehrte Strömungsverhältnisse und somit Anpreßdruckbestückung wird man bei rechtsgelagerten, in Ruhestellung nach links weisenden Scheibenwischern wählen.

Wie bereits erwähnt, läßt sich der Anpreßdruck auch durch andere Maßnahmen als durch die Auswahl der Zugfedern 22 erzielen, beispielsweise durch eine Vorspannung des Wischarmes 24, durch eine weitere Feder, die der Zugfeder 22 parallel liegt, durch unterschiedliche Neigung des Wischerlagers 12 zur Scheibe 36, oder durch elektrisch erregbare Vorrichtungen, wie beispielsweise Bimetallfedern.

**Ansprüche**

1. Scheibenwischeranordnung mit mindestens zwei Scheibenwischern für die Frontscheibe eines Kraftfahrzeuges und mit jeweils einem Scheibenwischer zugeordneten Anpreßvorrichtungen zur Erzeugung eines Anpreßdruckes der Wischerblätter auf die Scheibe, dadurch gekennzeichnet, daß bei Stillstand des Fahrzeuges mindestens ein Wischer einen sich von den anderen Scheibenwischern unterscheidenden Anpreßdruck aufweist.

2. Scheibenwischeranordnung nach Anspruch 1, mit einer jedem Scheibenwischer zugeordneten Zugfeder zur Erzeugung des Anpreßdruckes, dadurch gekennzeichnet, daß mindestens zwei Wischer Zugfedern mit unterschiedlicher Federkonstante aufweisen.

Fig. 1